# EUROPÄISCHE PATENTANMELDUNG

(11) **EP 2 413 156 A1**
(43) Veröffentlichungstag der Anmeldung: **01.02.2012**
(21) Anmeldenummer: 11175142.6
(22) Anmeldetag: 25.07.2011
(51) Int. Cl.: G01S 7/03, B61F 15/00, H01Q 1/22, G01S 13/60, B61L 25/02

(54) **Gehäusebauteil für eine Radlagereinheit eines Schienenfahrzeugs aufweisend eine Sende- Empfangseinheit für elektromagnetische Wellen**

(30) Priorität: 28.07.2010 DE 102010038551
(71) Anmelder: Aktiebolaget SKF, 41 550 Göteborg (SE)
(72) Erfinder: Schaller, Wolfgang, 97332 Volkach (DE); Schmiechen, Rolf, 97525 Schwebheim (DE); Martinez, Victor, 28045 Madrid (ES)
(74) Vertreter: Schonecke, Mitja

(57) **Zusammenfassung**

Ein Gehäusebauteil für eine Radlagereinheit eines Schienenfahrzeugs weist eine Sende- und Empfangseinheit für elektromagnetische Wellen auf, wobei die Sende-und Empfangseinheit derart ausgebildet und angeordnet ist, dass zur Messung einer zurückgelegten Wegstrecke des Schienenfahrzeugs abgestrahlte Wellen von der Umgebung reflektiert und wieder empfangen werden können.

## Beschreibung

Die Erfindung betrifft ein Gehäusebauteil für eine Radlagereinheit eines Schienenfahrzeugs und eine Radlagereinheit für ein Schienenfahrzeug.

Radlagereinheiten für Schienenfahrzeuge weisen im Allgemeinen Wälzlager zur drehbaren Lagerung der Fahrzeugachsen auf. Die Wälzlager werden in einem Achsgehäuse gehaltert, das beispielsweise mit einem Wagon des Fahrzeugs federnd verbunden ist. Zudem ist es bekannt, eines oder mehrere der Wälzlager mit Sensoren zur Erfassung deren Rotation bei Bewegung des Wagons auszustatten. Aus dem Signal der Sensoren kann beispielsweise die zurückgelegte Wegstrecke des Fahrzeugs ermittelt werden. Alternativ ist es möglich, über zusätzliche radarbasierte Geräte, die unabhängig vom Radlager am Wagon befestigt werden, die zurückgelegte Wegstrecke zu ermitteln. Dazu werden Radarwellen abgestrahlt und am Boden reflektiert. Die reflektierten Radarwellen werden wieder empfangen und daraus die zurückgelegte Wegstrecke des Wagons ermittelt. Zur Messung der Wegstrecke lassen sich ebenfalls GPS-basierte Systeme verwenden.

Es ist Aufgabe der vorliegenden Erfindung, ein Gehäusebauteil für eine Radlagereinheit eines Schienenfahrzeugs und eine entsprechende Radlagereinheit für ein Schienenfahrzeug bereitzustellen, mittels dem die zurückgelegte Wegstrecke des Fahrzeugs ermittelbar ist.

Diese Aufgabe wird durch ein Gehäusebauteil gemäß dem Hauptanspruch und eine Radlagereinheit gemäß dem nebengeordneten Anspruch gelöst. Vorteilhafte Ausgestaltungen sind Gegenstand der jeweils abhängigen Unteransprüche.

Gemäß Hauptanspruch wird ein Gehäusebauteil für eine Radlagereinheit eines Schienenfahrzeugs angegeben, aufweisend eine Sende- und Empfangseinheit für elektromagnetische Wellen, wobei die Sende- und Empfangseinheit derart angeordnet ist, dass abgestrahlte Wellen von der Umgebung reflektiert und wieder empfangen werden können. Entsprechend wird ein Radlagergehäuse für ein Schienenfahrzeug mit einem derartigen Gehäusebauteil Gegenstand der Erfindung sein.

Durch die Integration der Sende- und Empfangseinheit in das Gehäusebauteil der Radlagereinheit des Schienenfahrzeugs, die ohnehin bei jedem Schienenfahrzeug vorhanden ist, lässt sich ein platzsparendes Bauteil schaffen, mit dem sich die zurückgelegte Wegstrecke auf einfache Weise ermitteln lässt. Bei dieser platzsparenden Möglichkeit der Integration der elektromagnetischen Wegstreckenmessung in das Gehäuse der Radlagereinheit ist es nicht mehr notwendig, eine separat am Schienenfahrzeug angeordnete Sende- und Empfangseinheit vorzusehen. Hinzu kommt vorteilhaft, dass einer Vereisung und damit Funktionsstörung der Sende-und Empfangseinheit bei kalten Temperaturen dadurch entgegengewirkt wird, dass das gesamte Gehäuse der Radlagereinheit bei Betrieb des Schienenfahrzeugs durch die innerhalb der Radlagereinheit befindlichen Wälzlager ausreichend erwärmt wird. Somit ist durch die platzsparende Anordnung der Sende- und Empfangseinheit im Gehäusebauteil auch im Winter eine sichere Funktionsfähigkeit der Wegstreckenmessung gewährleistet. Bekannte, beispielsweise auf Radarmessungen beruhende Systeme müssten eine separate Heizung aufweisen, um auch bei kalten Außentemperaturen sicher funktionieren zu können. Dies wiederum erhöht den Aufwand an Material und Energie bei Bereitstellung und Betrieb derartiger Systeme. Durch die integrierte Lösung lässt sich dieser Aufwand deutlich reduzieren. Bei der Sende- und Empfangseinheit kann es sich vorzugsweise um eine Radarantenne handeln.

In einer vorteilhaften Ausgestaltung der Erfindung ist die Sende- und Empfangseinheit derart am Gehäusebauteil angeordnet, dass sie bei bestimmungsgemäßem Einbau im Gehäuse des Radlagers außen liegt. Bei außen liegender Anordnung der Sende- und Empfangseinheit lassen sich die elektromagnetischen Wellen auf einfache Weise beispielsweise in Richtung der Schiene oder des Schotterbetts abstrahlen und entsprechend reflektierte elektromagnetische Wellen wieder durch die Empfangseinheit empfangen.

In einer vorteilhaften Ausgestaltung der Erfindung ist das Gehäusebauteil abnehmbar ausgeführt und beispielsweise mittels Schrauben am übrigen Gehäuse befestigt. Somit wird ein einfacher Zugang zu Wartungszwecken geschaffen. In einer bevorzugten Ausführungsform der Erfindung ist das Gehäusebauteil als Deckel für ein Achsgehäuse der Radlagereinheit des Schienenfahrzeugs ausgebildet.

In einer vorteilhaften Ausgestaltung der Erfindung weist das Gehäusebauteil eine Steuer- und/oder Auswerteeinheit für die Sende- und Empfangseinheit auf. Bevorzugt liegt die Steuer- und/oder Auswerteeinheit bei bestimmungsgemäßem Einbau des Gehäusebauteils im Gehäuse der Radlagereinheit innen und ist somit vor Umwelteinflüssen geschützt. Die Steuer- und/oder Auswerteeinheit ist mit der Sende-und Empfangseinheit verbunden. Somit lassen sich durch entsprechende Steuersignale elektromagnetische Wellen mit der Sende- und Empfangseinheit abstrahlen und die reflektierten elektromagnetischen Wellen wieder empfangen. Die empfangenen Wellen lassen sich entsprechend mittels der Auswerteeinheit verarbeiten und die zurückgelegte Wegstrecke über einen entsprechenden Algorithmus ermitteln. Die Steuer- und Auswerteeinheit ist bevorzugt mit einem zentralen Zuginformationssystem des Schienenfahrzeugs verbunden, so dass die zurückgelegte Wegstrecke abrufbar ist.

In einer vorteilhaften Ausgestaltung der Erfindung ist die Sende- und Empfangseinheit im Wesentlichen zweidimensional ausgedehnt und parallel zu einer Oberfläche des Gehäusebauteils ausgerichtet. Durch die flächige ausgedehnte Ausbildung der Sende- und Empfangseinheit nimmt diese im Wesentlichen senkrecht zur Oberfläche des Gehäusebauteils keinen zusätzlichen Raum ein, so dass die Radlagereinheit im Vergleich zu bestehenden Gehäuseauslegungen nur unwesentlich verändert werden muss.

In einer alternativen Ausgestaltung der Erfindung ist die Sende- und Empfangseinheit im Wesentlichen zweidimensional ausgedehnt und unter einem spitzen Winkel zu einer Oberfläche des Gehäusebauteils ausgerichtet. Je nach Lage des Gehäusebauteils am Achslagergehäuse kann es erforderlich sein, die Sende- und Empfangseinheit etwas gekippt im Vergleich zur Oberfläche anzuordnen, damit die abgestrahlten elektromagnetischen Wellen in der Umgebung reflektiert werden können.

Vorteilhaft ist eine Ausgestaltung der Erfindung derart, dass die Oberfläche bei bestimmungsgemäßem Einbau in einem Achslagergehäuse des Radlagers im Wesentlichen vertikal zum Erdboden ausgerichtet ist. Bei paralleler Ausrichtung der Oberfläche und damit im Wesentlichen auch der Sende- und Empfangseinheit zum Erdboden bietet die Sende- und Empfangseinheit eine vergleichsweise großen Angriffsfläche für vom Erdboden während der Bewegung des Schienenfahrzeugs aufgewirbelte Gegenstände, wie beispielsweise Schottersteine. Beschädigungen der Sende- und Empfangseinheit durch Steinschlag wird jedoch wirksam vorgebeugt, wenn die Oberfläche im Wesentlichen vertikal zum Erdboden ausgerichtet ist. Gleiches gilt dann für die entweder parallel oder im spitzen Winkel zu der Oberfläche ausgerichtete Sende- und Empfangseinheit.

Gemäß dem nebengeordneten Patentanspruch wird eine Radlagereinheit für ein Schienenfahrzeug angegeben, aufweisend folgende Merkmale:
- wenigstens eine Lageranordnung,
- ein Gehäuse zur Halterung der Lageranordnung am Schienenfahrzeug und
- das Gehäuse weist wenigstens ein Gehäusebauteil nach einem der Ansprüche 1 bis 7 auf.

Mit dieser Radlagereinheit gemäß dem nebengeordneten Patentanspruch lassen sich die erfindungsgemäßen Vorteile wie bereits bei der Beschreibung des entsprechenden Gehäusebauteils in optimaler Form nutzen.

In einer vorteilhaften Ausgestaltung der Erfindung weist die Radlagereinheit eine Impulssensoreinheit zur Erfassung der Umdrehungen wenigstens eines Wälzlagers der Lageranordnung auf. Die Impulse der Sensoreinheit lassen sich somit wie in einem bekannten Eisenbahnradlager zur Ermittlung der Wegstrecke heranziehen. Folglich liegt zusätzlich zu dem Wegstreckenmesssystem am Gehäuse eine zusätzliche Informationsquelle für Daten vor, aus denen sich die Wegstrecke ermitteln lässt. Das System weist somit Redundanz auf, falls beispielsweise eines der Systeme durch einen Defekt ausfällt.

In einer vorteilhaften Ausgestaltung der Erfindung ist die Impulssensoreinheit mit der Steuer- und/oder Auswerteeinheit verbunden. Hiermit lässt sich ein noch höherer Integrationsgrad des gesamten Systems im Gehäuse der Radlagereinheit erreichen.

Weitere Vorteile und Ausgestaltungen der Erfindung ergeben sich aus dem nachfolgend beschriebenen Ausführungsbeispiel anhand der beigefügten Figuren. Es zeigen:
- Figur 1: eine Seitenansicht eines Fahrgestelllagers für einen Eisenbahnwagon und
- Figur 2: eine Schnittdarstellung durch eine Radlagereinheit eines Eisenbahnlagers.

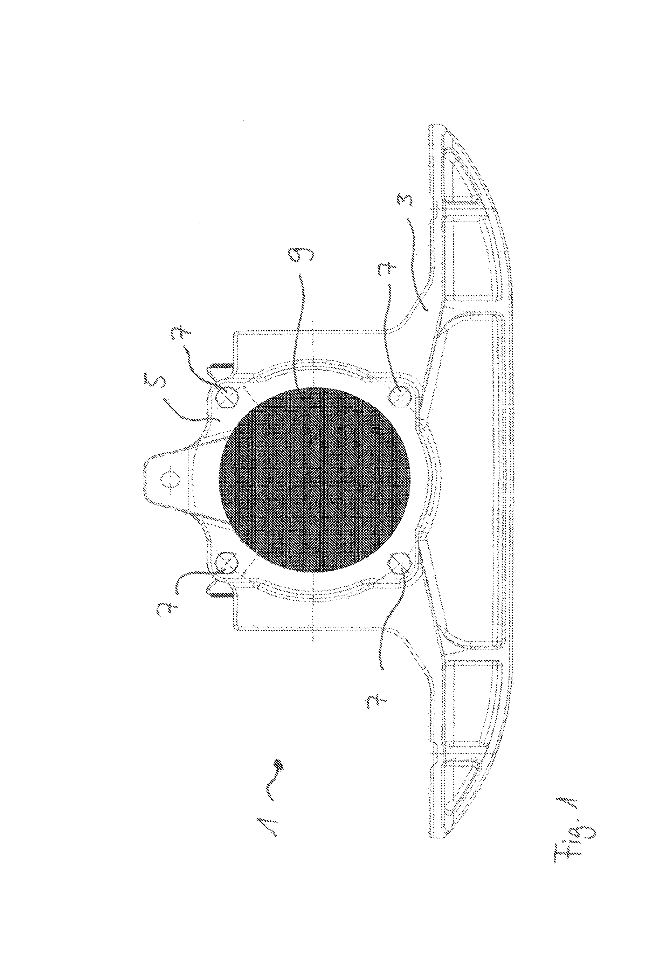

In der Figur 1 ist als ein Ausführungsbeispiel der Erfindung ein Achsgehäuse 1 für ein Eisenbahnfahrzeug dargestellt. Es besteht aus einem Träger 3, auf dem durch eine Federung ein Eisenbahnwagon mit dem Achsgehäuse 1 verbindbar ist. Weiter umfasst das Achsgehäuse 1 einen Deckel 5, der über Verschraubungen 7 mit dem Träger 3 verbunden ist. Auf dem Deckel 5 des Achsgehäuses 1 ist eine Radarantenne 9 angeordnet. Die Radarantenne 9 ist im vorliegenden Ausführungsbeispiel rund und vergleichsweise flach ausgeführt. Alternativ lassen sich ebenfalls andere Geometrien für die Radarantenne verwenden. So könnte diese beispielsweise halbkugelförmig ausgebildet sein.

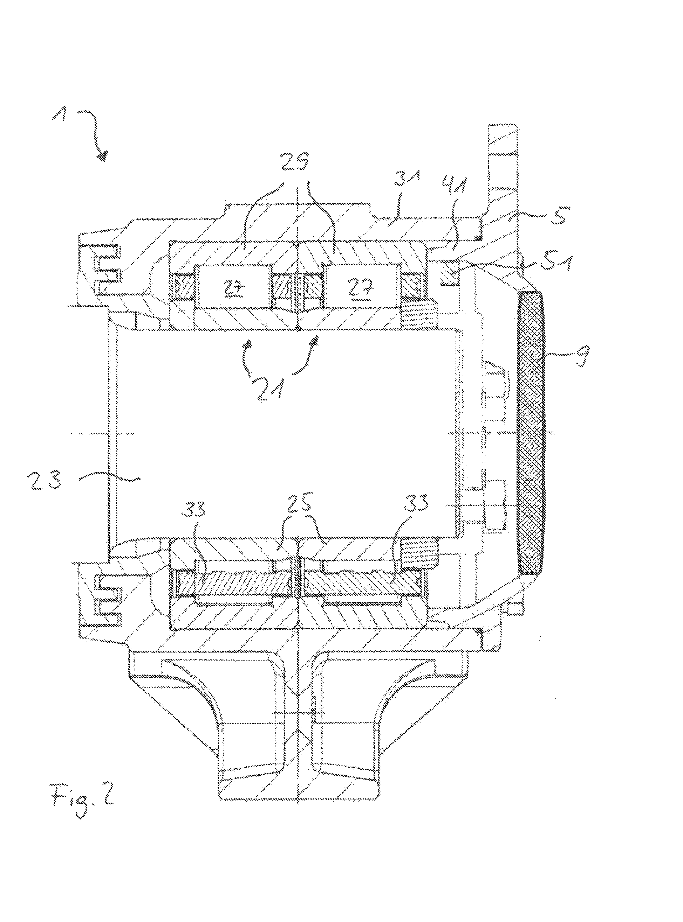

In der Figur 2 ist eine Schnittdarstellung durch das Achsgehäuse 1 dargestellt. Am axial rechtsseitigen Ende des Achsgehäuses 1 ist der Deckel 5 dargestellt, auf dem die Radarantenne 9 angeordnet ist. Im Achsgehäuse 1 sind zwei Zylinderrollenlager 21 angeordnet, die eine Welle 23 des Schienenfahrzeugs drehbar relativ zum Achsgehäuse 1 lagern. Die Zylinderrollenlager 21 weisen jeweils einen Innenring 25 auf, der über Wälzkörper 27 drehbar mit jeweils einem Außenring 29 verbunden ist. Die Innenringe 25 sind dabei fest mit der Welle 23 verbunden, während die Außenringe 29 fest in einem Gehäuseteil 31 des Achsgehäuses 1 liegen. Die Wälzkörper 27 werden durch Käfige 33 im Zylinderrollenlager 21 geführt.

Im Deckel 5 ist eine Steuer- und Auswerteeinheit 51 angeordnet, die mit der Radarantenne 9 verbunden ist. Mittels der Steuer- und Auswerteeinrichtung lassen sich mittels der Radarantenne 9 Radarwellen erzeugen, die vom schräg unterhalb des Achsgehäuses bei Bewegung des entsprechenden Eisenbahnwagons vorbeigleitenden Boden reflektiert werden. Die reflektierten Radarwellen werden wiederum durch die Radarantenne 9 aufgenommen und in die Steuer- und Auswerteeinheit 51 übermittelt. Innerhalb der Steuer- und Auswerteeinheit 51 wird über entsprechende Elektronikbauteile aus dem gesendeten Signal in Form von Radarwellen und dem empfangenen Signal die zurückgelegte Wegstrecke des Eisenbahnwagons ermittelt. Optional und hier nicht dargestellt lässt sich ein an sich bekannter Radimpulssensor, der die Umdrehungen der Zylinderrollenlager 21 misst, ebenfalls mit der Steuer-und Auswerteeinheit 51 verbinden, so dass dieser ein weiteres Signal zur redundanten Ermittlung der zurückgelegten Wegstrecke zur Verfügung steht.

Bei bestimmungsgemäßem Einbau des Achsgehäuses in einem Eisenbahnwagon ist die Radarantenne 9 im Wesentlichen senkrecht zum Erdboden ausgerichtet. Während der Fahrt des Eisenbahnwagons aufgewirbelte Steine aus dem Schotterbett der Schienen können daher nicht auf die Radarantenne 9 prallen und zu Beschädigungen führen. Es ist jedoch sicherzustellen, dass die Radarwellen der Radarantenne den unter bzw. seitlich des Schienenfahrzeugs befindlichen Boden erreichen können. Entsprechend weist die Radarantenne 9 ein Antennenprofil auf, das Radarwellen im Wesentlichen schräg nach unten aussendet. Zur Unterstützung dieser Funktion ist es ebenfalls möglich, die Radarantenne gekippt im Vergleich zur Oberfläche des Deckels 5 anzuordnen, so dass die Radarwellen effektiv nach unten unter das Schienenfahrzeug abgestrahlt werden.

Bei niedrigen Außentemperaturen kommt es unter Umständen zur Bildung von Eis auf dem Gehäuse des Achslagers 1. Folglich vereist auch die Radarantenne 9 und kann daher in ihrer Funktion gestört sein. Jedoch wird bei Aufnahme des Betriebs des Schienenfahrzeugs durch die rotierenden Zylinderrollenlager 21 Wärme im Achsgehäuse 1 erzeugt. Diese Wärme führt dazu, dass eventuell auf dem Achsgehäuse und der Radarantenne 9 befindliches Eis schmilzt und die Funktion der Radarantenne ohne zusätzliches Heizelement gewährleistet ist. Zur Unterstützung der Erwärmung der Radarantenne 9 weist der Deckel 5 einen radial umlaufenden Fortsatz 41 auf, der mit dem Außenring 29 des axial benachbarten Zylinderrollenlagers 21 in Kontakt steht. Durch die Bewegung des Zylinderrollenlagers 21 entstehende Wärme im Außenring 29 wird somit effektiv durch thermischen Kontakt in den Deckel 5 und damit zur Radarantenne 9 geleitet.

Im beschriebenen Ausführungsbeispiel wurde ein zweireihiges Zylinderrollenager eingesetzt. Alternativ lässt sich die Erfindung vorteilhaft mit beliebigen anderen Lagerarten kombinieren, also beispielsweise Kegelrollenlagern oder Kugellagern.

### Bezugszeichenliste

- 1: Achsgehäuse
- 3: Träger
- 5: Deckel
- 7: Verschraubungen
- 9: Radarantenne

- 21: Zylinderrollenlager
- 23: Welle
- 25: Innenringe
- 27: Wälzkörper
- 29: Außenringe

- 33: Käfige

- 41: Fortsatz

- 51: Steuer- und Auswerteeinheit

## Patentansprüche

1. Gehäusebauteil für eine Radlagereinheit eines Schienenfahrzeugs, aufweisend eine Sende- und Empfangseinheit für elektromagnetische Wellen, wobei die Sende- und Empfangseinheit derart ausgebildet und angeordnet ist, dass zur Messung einer zurückgelegten Wegstrecke des Schienenfahrzeugs abgestrahlte Wellen von der Umgebung reflektiert und wieder empfangen werden können.

2. Gehäusebauteil nach Anspruch 1, wobei die Sende- und Empfangseinheit derart am Gehäusebauteil angeordnet ist, dass sie bei bestimmungsgemäßem Einbau im Gehäuse der Radlagereinheit außen liegt.

3. Gehäusebauteil nach Anspruch 1 oder 2, weiter aufweisend eine Steuer-und/oder Auswerteeinheit für die Sende- und Empfangseinheit.

4. Gehäusebauteil nach Anspruch 1, 2 oder 3, wobei die Sende- und Empfangseinheit eine Radarantenne umfasst.

5. Gehäusebauteil nach einem der Ansprüche 1 bis 4, wobei die Sende- und Empfangseinheit im Wesentlichen zweidimensional ausgedehnt und parallel zu einer Oberfläche des Gehäusebauteils ausgerichtet ist.

6. Gehäusebauteil nach einem der Ansprüche 1 bis 4, wobei die Sende- und Empfangseinheit im Wesentlichen zweidimensional ausgedehnt und unter einem spitzen Winkel zu einer Oberfläche des Gehäusebauteils ausgerichtet ist.

7. Gehäusebauteil nach einem der obigen Ansprüche, das derart ausgeführt ist, dass die Oberfläche bei bestimmungsgemäßem Einbau im Gehäuse des Radlagers im Wesentlichen vertikal zum Erdboden ausgerichtet ist.

8. Radlagereinheit für ein Schienenfahrzeug, aufweisend folgende Merkmale:
- wenigstens eine Lageranordnung,
- ein Gehäuse zur Halterung der Lageranordnung am Schienenfahrzeug und
- das Gehäuse weist wenigstens eine Gehäusebauteil nach einem der Ansprüche 1 bis 7 auf.

9. Radlagereinheit nach Anspruch 8, weiter aufweisend eine Impulssensoreinheit zur Erfassung der Umdrehungen der Lageranordnung.

10. Radlagereinheit nach einem der Ansprüche 8 oder 9, wobei die Impulssensoreinheit und die Sende- und Empfangseinheit mit der Steuer- und/oder Auswerteeinheit verbunden sind.
